# EUROPÄISCHE PATENTANMELDUNG

(11) **EP 1 263 178 A2**
(43) Veröffentlichungstag der Anmeldung: **04.12.2002**
(21) Anmeldenummer: 02100448.6
(22) Anmeldetag: 06.05.2002
(51) Int. Cl.: H04L 12/58, H04L 29/06, H04Q 7/22

(54) **Verfahren und Vorrichtung zur Präsentation von Multimedianachrichten**

(30) Priorität: 28.05.2001 DE 10125892; 11.10.2001 DE 10150130
(71) Anmelder: SIEMENS AKTIENGESELLSCHAFT, 80333 München (DE)
(72) Erfinder: Prenzel, Ralf, Dr., 38259 Salzgitter (DE); Trauberg , Markus, 38159 Velchede (DE); Wojzischke, Christoph, 38118 Braunschweig (DE)

(57) **Zusammenfassung**

Die vorliegende Erfindung betrifft ein Verfahren zur Übertragung von Daten nach dem Oberbegriff von Anspruch 1, ein Teilnehmer-Endgerät, ein Computerprogrammerzeugnis und ein Kommunikationssystem.

Um ein Verfahren, ein Teilnehmer-Endgerät, ein Computerprogrammerzeugnis und ein Kommunikationssystem vorzuschlagen, durch die ein initiales Erscheinungsbild der Daten für den Empfänger im wesentlichen frei vorgegeben wird, wird vorgeschlagen, daß eine Kennzeichnung eines Elementes zur Veranlassung einer unmittelbaren Darstellung dieses Elementes beim Öffnen der Daten vorgenommen wird.

## Beschreibung

Die vorliegende Erfindung betrifft ein Verfahren zur Übertragung von Daten nach dem Oberbegriff von Anspruch 1, ein Teilnehmer-Endgerät, ein Computerprogrammerzeugnis und ein Kommunikationssystem. Unter dem Begriff der Daten wird im Rahmen der vorliegenden Erfindung auch jede Art von Information verstanden, die aus einzelnen Bestandteilen zusammengesetzt ist. Dabei können diese einzelnen Bestandteile oder Elemente nach unterschiedlichen Standards aufgebaut sein. Demnach können in diesem Sinne Daten auch eine multimediale Nachricht darstellen.

Verfahren und Vorrichtungen zur Übertragung verschiedener Formen oder Formate von Daten sind bekannt. Ein Mobilfunksystem nach dem Global System for Mobile Communications Standard, kurz GSM, bietet beispielsweise neben der Sprachtelephonie auch die Möglichkeit, Information in Form kurzer Textnachrichten von bis zu 160 Zeichen Länge zu versenden bzw. zu empfangen. Dieser Dienst wird als Short Message Service (SMS) bezeichnet.

Für das Mobilfunksystem der nächsten Generation, Universal Mobile Telecommunication System UMTS, wird zur Zeit eine multimediafähige Variante eines mobilen Nachrichtendienstes standardisiert, der so genannte Multimedia Messaging Service MMS, siehe 3GPP TS 23.140 version 4.1.0, Release 4; Third Generation Partnership Project; Technical Specification Group Terminals; Multimedia Messaging Service (MMS); Functional Description; Stage 2 und 3GPP TS 22.140 v.4.0.1 (Juli 2000), 3rd Generation Partnership Project; Technical Specification Group Services and System Aspects; Service Aspects; Stage 1 Multimedia Messaging Service. Informationen als Nachrichten mit multimedialen Inhalten werden im Folgenden zur besseren Abgrenzung von den Textnachrichten des SMS nur noch Multimedia Message genannt, kurz MM. Im Gegensatz zu dem SMS entfällt bei dem MMS die Beschränkung auf reine Textinhalte. Im MMS wird es auch möglich sein, Texte dem individuellen Geschmack entsprechend zu formatieren, sowie beliebige Inhalte in eine Nachricht einzubetten. Dazu zählen z.B. Audio- und Videoinhalte, Standbilder, Grafiken, Texte, u.a..

Nach dem bisherigen Stand der Technik ist eine Implementierung von MMS lediglich über das Wireless Application Protocol WAP realisierbar. Zur Überbrückung der Luftschnittstelle zwischen einem MMS-tauglichen Endgerät und dem WAP Gateway ist die Benutzung des WAP Wireless Session Protocol WSP vorgesehen, siehe WAP-209-MMSEncapsulation, Release 2000; Wireless Application Protocol; WAP Multimedia Messaging Service; Message Encapsulation; MMS Proposed SCD 1.0 und WAP-203-WSP, Version 4-May-2000; Wireless Application Protocol, Wireless Session Protocol Specification; Chapter 8.4: "Header Encoding".

Ein weiteres sehr verbreitetes System stellt die Internet E-Mail dar, siehe unter RFC822: "Standard for the Format of ARPA Internet Text Messages", Crocker D., August 1982. URL: ftp://ftp.isi.edu/in-notes/rfc822.txt. Heute können in einer E-Mail fast beliebige Inhalte ohne Größenbeschränkungen transportiert werden, so daß die Internet E-Mail heute prinzipiell ähnliche Funktionen wie MMS bietet, aber bisher fast ausschließlich für festnetzgebundene Terminals verwendet wird. Im Unterschied zu MMS besteht eine Internet Mail grundsätzlich aus Header-Elementen und einem Text. Weitere, auch multimediale Objekte, können optional per Multipart Internet Mail Extension MIME in eine Internet Mail integriert werden, RFC2045: "Multipurpose Internet Mail Extensions (MIME) Part One: Format of Internet Message Bodies", Freed N., November 1996, URL: ftp://ftp.isi.edu/in-notes/rfc2045.txt.; RFC2046: "Multipurpose Internet Mail Extensions (MIME) Part Two: Media Types", Freed N., November 1996. URL: ftp://ftp.isi.edu/innotes/rfc2046.txt; RFC2047: "MIME (Multipurpose Internet Mail Extensions) Part Three: Message Header Extensions for Non-ASCII Text", Moore K., 11.1996. URL: ftp://ftp.isi.edu/innotes/rfc2047.txt.

Da die Internet E-Mail ihren Ursprung in der kurzen schriftlichen Nachricht hat ist der Nutzer einer solchen E-Mail es auch gewohnt, in seinem Internet Mail User Agent MUA, dem Programm zum Empfangen, Versenden und Bearbeiten der Mails, nach dem Öffnen einer Mail zunächst den direkt im Header enthaltenen Text der Mail angezeigt zu bekommen. Es ist üblich, darin auf die angehängten Objekte der Mail zu verweisen und diese eventuell in einen Kontext mit dem Text zu stellen.

Der vorliegenden Erfindung liegt die Aufgabe zugrunde, ein Verfahren, ein Teilnehmer-Endgerät, ein Computerprogrammerzeugnis und ein Kommunikationssystem vorzuschlagen, durch die ein initiales Erscheinungsbild der Daten für den Empfänger im wesentlichen frei vorgegeben wird.

Diese Aufgabe wird erfindungsgemäß durch ein Verfahren mit den Merkmalen des Anspruchs 1 und eine Teilnehmer-Endgerät mit den Merkmalen des Anspruchs 18 gelöst. Ferner sind ein Computerprogrammerzeugnis nach Anspruch 20 und ein Kommunikationssystem nach Anspruch 22 jeweils Lösungen dieser Aufgabe. Die Unteransprüche definieren jeweils bevorzugte und vorteilhafte Ausführungsformen der vorliegenden Erfindung.

Ein erfindungsgemäßes Verfahren zeichnet sich demnach dadurch aus, daß eine Kennzeichnung eines Elementes vorgenommen wird, um eine unmittelbare Darstellung dieses Elementes beim Öffnen der Daten beim Empfänger zu veranlassen. Damit wird ein vorbestimmtes Element eines beliebigen Standards aus einer zu übersendenden Datenmenge automatisch geöffnet, so daß der Empfänger im Gegensatz z.B. zu eine E-Mail nicht länger zwingend einen Text angezeigt bekommt. Das sofort geöffnete Element kann nach Auswahl durch einen Absender also auch einen Audioinhalt nutzen, um den Empfänger in individueller Weise auf eine neu eingegangene multimediale Nachricht aufmerksam zu machen.

In einer Weiterbildung der Erfindung werden die Daten zum Versand derart aufbereitet, daß sie einen Header zum Transport von Organisationsinformationen und einen Body zum Transport einer jeweiligen Nutzinformation umfassen. Die Nutzinformation umfaßt dabei vorzugsweise Elemente in Form mehrerer Datenpakete. Dabei wird ein erfindungsgemäßes Verfahren vorzugsweise für Daten eingesetzt, die als Multimedia Message MM in einem Multimedia Message Service MMS übertragen werden, insbesondere auf ein mobiles Teilnehmer-Endgerät oder speziell ein WAP-fähiges Mobiltelefon.

Im MMS fehlt aktuell die Möglichkeit, dem empfangenden User Agent Informationen über das initiale Erscheinungsbild der MM für den Empfänger zu beschreiben. Erfindungsgemäß wird hier nun die Möglichkeit geschaffen, auf ein in der MM enthaltenes Element zu verweisen, und damit die initiale Darstellung der MM für einen Empfänger durch einen Sender genau zu spezifizieren. Neben der Darstellung eines Textes ist somit auch jede Form der multimedialen Präsentation, z.B. eine Audiosequenz, ein Standbild oder auch eine Videosequenz als sofort zum Start ablaufende Einführung definierbar.

Aus dem Stand der Technik ist im MMS zwar die Codierung eines so genannten Start-Parameters am Anfang des Datenteils einer MM bekannt, wobei der Start-Parameter auf das Element der MM verweist, welches eine Präsentationsbeschreibung enthält. Als ein Beispiel für eine Präsentationsbeschreibung sei an dieser Stelle die Synchronized Multimedia Integration Language SMIL genannt, siehe SMIL 2.0 Specification; W3C Working Draft vom 01.03.2001; http://www.w3.org/TR/smil20/. Mit einer derartigen Präsentationsbeschreibung kann die Art der Darstellung der in der MM enthaltenen Elemente festgelegt werden. Für den Zweck, das initiale Erscheinungsbild der MM zu definieren, fehlt jedoch einerseits die Festlegung, daß die Präsentationsbeschreibung unmittelbar beim Öffnen der MM ausgewertet werden soll damit die Präsentation auch unmittelbar startet, und andererseits ist die Unterstützung eines Präsentationsbeschreibungsformates innerhalb der Standards für einen MMS U-ser Agent nicht vorgeschrieben. Hätte also eine MM ein Präsentationsbeschreibungsobjekt und der empfangende MMS User Agent die Möglichkeit, dieses abzuspielen, würde immer noch die Information fehlen, diese Präsentationsbeschreibung unmittelbar beim Öffnen der MM zu aktivieren und die Präsentation abzuspielen.

Erfindungsgemäß wird konform mit einem Standard eine Möglichkeit geschaffen, in einer MM des Multimedia Messaging Service MMS ein Objekt des Datenteils für die Darstellung durch den empfangenden User Agent mit dem Ziel zu kennzeichnen, daß dieses Objekt dem Empfänger nach dem Öffnen der MM durch den empfangenden User Agent unmittelbar angezeigt bzw. abgespielt wird. Hierzu wird in einer Weiterbildung der Erfindung eine Codierung der entsprechenden Information in der MM vorgeschlagen. Die Information dazu, welches Element der MM dargestellt werden soll, kann erfindungsgemäß grundsätzlich auf drei Arten codiert werden:
1. In einem Header der MM wird ein Datenelement (Header Field) eingefügt, das per eindeutigem Bezeichner (Identification; z.B.: Content-ID) auf das zuerst und unmittelbar nach dem Öffnen der MM auszugebende Element des Datenteils verweist. Das bezeichnete Element muß dazu direkt im Datenteil eine eindeutige Bezeichnung erhalten.
2. Enthält der Header einer MM bereits den Elementen der MM eindeutig zugeordnete Beschreibungen kann die gewünschte Information mit einer Markierung z.B. in Form eines Flags innerhalb der Beschreibung des Elements der MM, das beim Öffnen unmittelbar dargestellt werden soll, codiert werden.
   Verfahren zum Aufbau z.B. einer Content-ID sind oder einer eindeutig zugeordneten Beschreibung mit einem Flag nach den beiden vorstehenden Punkten sind vom Anmelder in den europäischen Patentanmeldungen mit den Anmeldenummern EP 01 101 057.6 und EP 01 107 278.2 offenbart worden.
3. Ferner kann in einem Datenteil der MM dasjenige Element der MM durch eine Markierung in Form eines Flags in den Header-Feldern des Elements selbst gekennzeichnet werden, das zuerst und unmittelbar ausgegeben werden soll.

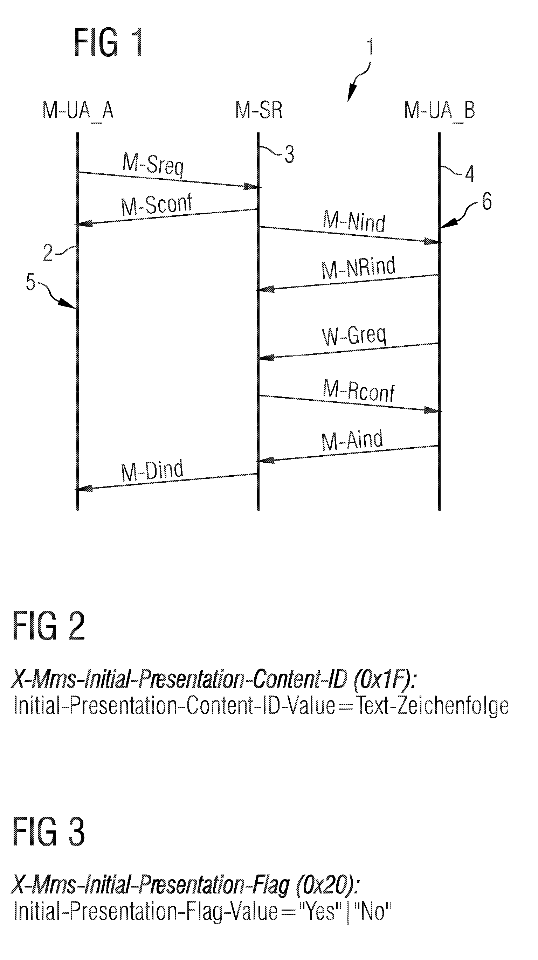

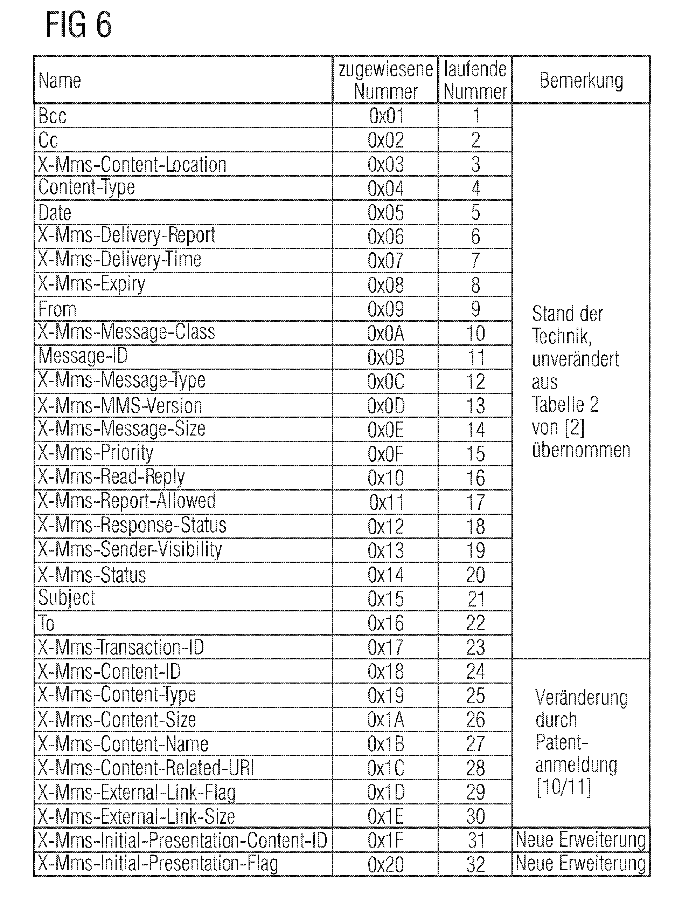

Eine Codierung kann vorteilhaft als Codierung des Feld-Namens und/oder eine Codierung des Feld-Wertes durchgeführt werden. In einer Weiterbildung der Erfindung wird das Header-Feld in WAP gemäß Fall 1 codiert. Dabei erfolgt die Codierung in einer Ausführungsform als Codierung eines Feld-Namens und eines Feld-Wertes. Der Feld-Namen mit der neuen Bezeichnung X-Mms-Initial-Presentation-Content-ID wird in einer Ausführungsform der Erfindung als hexadezimale Zahl 0x1F gemäß Figur 6 und der Feld-Wert von X-Mms-Initial-Presentation-Content-ID gemäß Figur 2 als Text-string. Dabei wird die Information im Header der MM vorzugsweise mit dem Header-Feld X-Mms-Initial-Presentation-Content-ID codiert und dem zu bezeichnenden Element eine Content-ID in einem Datenteil der zu übersendenden Daten bzw. der MM zugewiesen.

Nach Fall 3 wird alternativ ein zusätzliches Header-Feld in WAP wie folgt nach einem Feld-Namen und einem Feld-Wert codiert: Codierung des Feld-Namens X-Mms-Initial-Presentation-Flag als 0x20 gemäß Figur 6, Codierung des Feld-Wertes von X-Mms-Initial-Presentation-Flag gemäß Figur 3. Hierbei wird einem zu bezeichnenden Element in einem Datenteil der MM vorzugsweise ein Header-Feld X-Mms-Initial-Presentation-Flag zugefügt. Zudem wird das Element in einem Datenteil der zu übersendenden Daten der MM markiert.

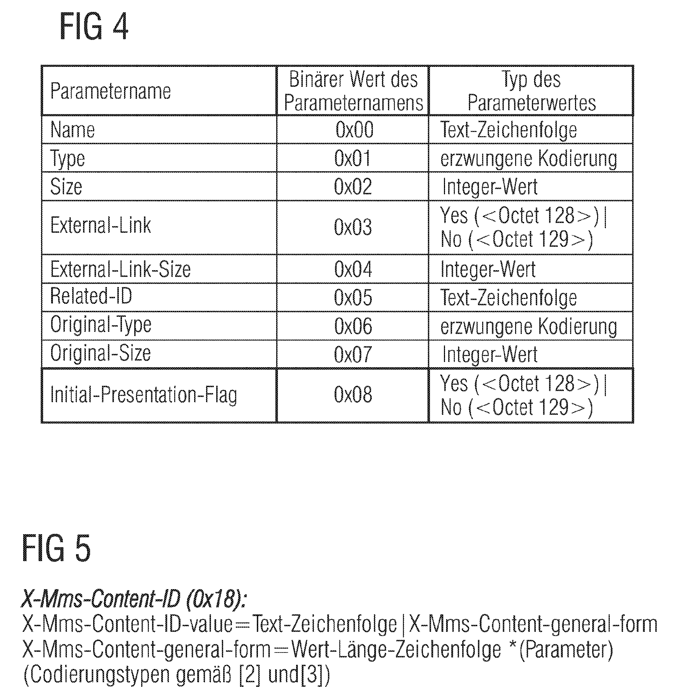

In einer besonders bevorzugten Ausführungsform der Erfindung wird gemäß Fall 2 einem zu bezeichnenden Element eine Content-ID in einem Datenteil der MM zugewiesen. In einem Header der betreffenden MM wird ein Verweis auf die Content-ID eingefügt, womit gemäß [11] eine Beschreibung des Elementes der MM eingefügt werden kann. Innerhalb dieser Beschreibung kann das Element der MM dann mit einem Parameter Initial-Presentation-Flag gemäß Figur 4 markiert werden.

Die jeweiligen Vorteile der drei genannten Möglichkeiten werden nachfolgend noch unter Bezug auf ein Ausführungsbeispiel im Detail dargestellt werden.

Die Kennzeichnung nach einem oder mehreren der vorstehenden Merkmale wird in einer Ausführungsform der Erfindung in den Daten der MM codiert, die von einem sendenden MMS User Agent zu einem MMS Relay zum Verschicken der MM gesendet wird. Nach dem WAP Standard erfolgt die Codierung also in der Meldung *M-Send.req.* Die Codierung erfolgt damit zentral beim Sender, so daß nachfolgend in einer unter Bezugnahme auf eine Abbildung der Zeichnung noch beschriebene Übertragungskette keine Modifikation der Daten mehr vorgenommen werden muß.

In einem alternativen Verfahren kann die Kennzeichnung in den Daten codiert werden, die von einem MMS Relay zu einem empfangenden MMS User Agent zur Benachrichtigung des empfangenden User Agent über das Vorliegen neuen Daten (MM) gesendet werden. Das entspricht nach dem WAP Standard einer Codierung in der Nachricht *M-Notification.ind.* Schließlich kann die Kennzeichnung auch in den Daten codiert werden, die von einem MMS Relay zu einem empfangenden MMS User Agent zur Zustellung der MM gesendet werden. Nach dem WAP Standard entspricht das also der Meldung *M-Retrieve.conf*. Dabei ist diesen beiden Codierungsverfahren gemeinsam, daß eine Aufgabenverlagerung von dem Sender in das Kommunikationssystem vorgenommen wird. Es wird mithin Intelligenz in ein Netzwerk eingebracht, wodurch schneller gearbeitet werden kann, und zudem können auch ohne Nachrüstung beim Sender neue Verfahren oder Teilverfahren eingesetzt werden, da ein Austausch eines alten gegen ein neues Verfahren nun zentral vorgenommen wird. Nicht zuletzt ist wichtig, daß durch die Entlastung des Senders auch dessen Ressourcen geschont werden. Davon sind insbesondere die Batterien bzw. Akkus betroffen, die durch diese Maßnahme weniger Energie zur Verarbeitung aufbringen müssen. Zudem können beim Datenversand auch noch zusätzlich Kompressionsverfahren zur Beschleunigung und weiteren Entlastung der Energieversorgung eingesetzt werden.

In einer vorteilhaften Weiterbildung der Erfindung wird ein gekennzeichnetes Element an den empfangenden User Agent bevorzugt übertragen. Damit kann in einer bevorzugten Ausführungsform der Erfindung eine vorgegebene Information eben des initial zu öffnenden Datenelements als Entscheidungshilfe dafür verwendet werden, ob das gekennzeichnete Element bevorzugt bzw. alleine zum User Agent übertragen werden soll. Zudem kann eine Empfänger so besser darüber entscheiden, ob die betreffende MM nach Empfang eines gekennzeichneten Element zum initialen Start der MM alle weiteren Elemente empfangen oder verworfen werden sollen. Über diese Entscheidung kann wiederum nach [11] eine Rückmeldung an den Sender erfolgen. So kann dieses Verfahren in einem erfindungsgemäßen Kommunikationssystem generell auch zum Versand von Daten oder Nachrichten mit informierendem oder werbendem Inhalt eingesetzt werden. Es bietet im Gegensatz zu bekannten Werbe- und Informationsmethoden den großen Vorteil, daß es nur elektronisch aufbereitet und nicht physikalisch oder körperlich hergestellt werden muß. Fertigungskosten und Lagerung sowie wesentliche Kosten der Verteilung entfallen somit. Dabei ist ein Vertrieb voll automatisierbar, und zudem kann auch eine Auswertung von verschiedenen zusätzlichen Formen der Resonanz der beteiligten direkt angesprochenen Verkehrskreise vorgenommen werden. Als Gradmesser für die Akzeptanz einer Werbemaßnahme können die Zahlen der teilweise oder vollständig durchgeführten Downloads ausgewertet werden. Aktuell kann die Wirkung einer Werbemaßnahme nur anhand von Bestellung, schlimmstenfalls anhand von Beschwerden gemessen werden.

Die in einer Empfängerbenachrichtigung *M-Nind* zusätzliche Information wird in einer bevorzugten Ausführungsform der Erfindung derart ausgebaut von einem Empfänger auch dazu genutzt werden, um gezielt nur das markierte Element der MM herunterzuladen, wie dies gemäß der vorstehend genannten Patentanmeldungen ermöglicht wird.

Die Markierung eines Elements kann nach einem der vorstehenden Merkmale durchgeführt werden, so daß dieses auch unter mehreren gleichartigen Elementen einer MM als erstes geöffnet und angezeigt wird. In einer bevorzugten Ausführungsform der Erfindung wird als erstes zu öffnendes Element ein Audio- oder gar Videoinhalt ausgewählt. Damit kann der Sender den Start seiner MM beim Empfänger individuell gestalten

Die vorliegende Erfindung wird nachfolgend unter Bezugnahme auf die beigefügte Zeichnung anhand bevorzugter Ausführungsbeispiele erläutert.

In der Zeichnung zeigt:
- Fig. 1: eine schematische Abbildung von einer Datenübertragung zugeordneten Sendungen gemäß dem Wireless application protocoll bzw. WAP-Standard zwischen der Ebene des Versenders und der des Providers einer- seits und der Ebene des Providers und der des Empfängers andererseits;
- Fig. 2: eine Codierung des neuen Header-Feldes nach dem 1. Fall gemäß vorliegender Erfindung;
- Fig. 3: eine Codierung des neuen Header-Feld-Namens nach dem 3. Fall gemäß vorliegender Erfindung;
- Fig. 4: eine Codierung der Parameternamen und Parameterwerte in tabellarischer Darstellung, wobei gemäß dem 2. Fall nach vorliegender Erfindung neu eingeführte Einträge grau hinterlegt sind und alle anderen Parameter aus [11] stammen;
- Fig. 5: eine erfindungsgemäße Codierung des Header-Feldes;
- Fig. 6: eine Darstellung der Zuweisung binärer Codes zu den Feldnamen, wobei gegenüber [2] 7.3 neu nach dieser Erfindung eingeführte Einträge grau hinterlegt sind;
- Fig. 7: eine tabellarische Darstellung der Header-Felder der Sendeanfrage WAP Message M-Send.req, wobei gegenüber [2] 6.1 neu nach dieser Erfindung eingeführte Einträge grau hinterlegt sind und alle anderen Parameter aus [2] 6.1 stammen;
- Fig. 8: eine tabellarische Darstellung der Header-Felder der WAP Message M-Notification.ind gemäß [2] 6.2 und
- Fig. 9: Header-Felder der WAP Message M-Retrieve.conf nach [2] 6.3.

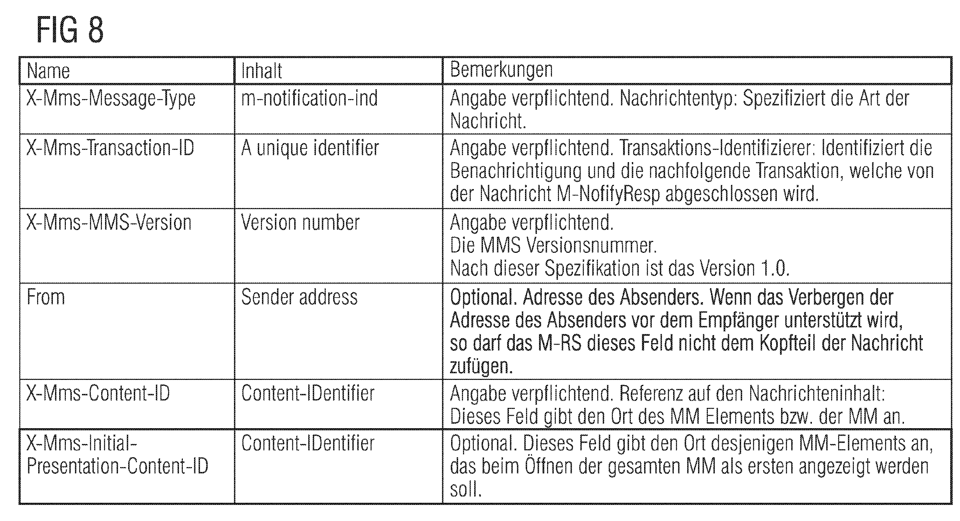

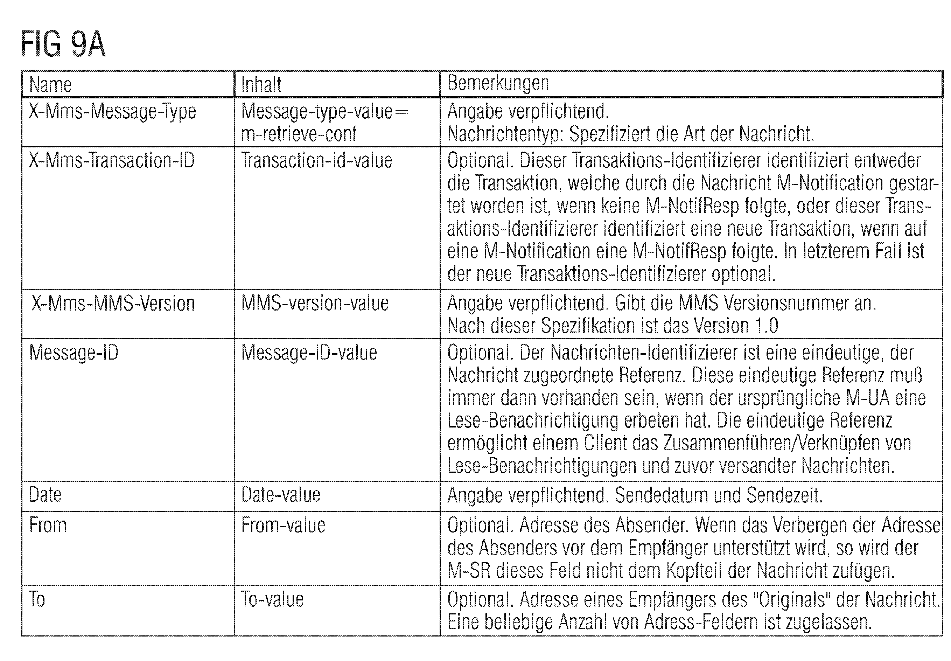

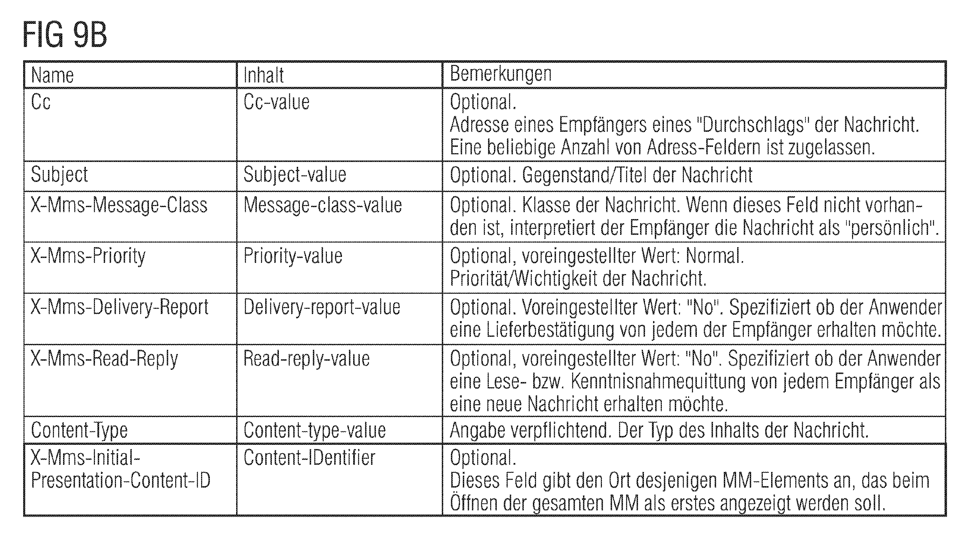

Elemente mit gleicher Funktion und Wirkungsweise sind in den Figuren 1 bis 9 durchgehend jeweils mit denselben Bezugszeichen versehen.

In dem Ausführungsbeispiel ist die Anwendung der Erfindung auf ein Datenübertragungsschema 1 für den WAP-Standard, wie es in der Übertragung von insbesondere Bilddaten und formatierten Textdaten im Universal mobile telecommunication standard, dem UMTS-Standard, Verwendung finden wird, beschrieben. Es versteht sich, daß die Erfindung auch auf andere Standards übertragbar ist. Insbesondere sind hier auch gemischte Kommunikationssysteme gemeint, die neben Mobilfunkstrecken auch Festnetzverbindungen o.ä. umfassen.

Wie bereits eingangs beschrieben ist im UMTS-Standard vorgesehen, zusätzlich zum bisherigen Short Message Service SMS einen sogenannten Multimedia Messaging Service MMS für die Übertragung von Nachrichten, auch als Multimedia messages MMs bezeichnet, vorzusehen. Damit können auch formatierte Texte und Bilder mit und ohne Ton übertragen werden. Die im SMS vorhandene Beschränkung auf eine Nachrichtenlänge von 160 Zeichen entfällt. Eine Übertragung u.a. von Audio- und Videonachrichten ist möglich.

MMS ist über die Nutzung von WAP realisierbar. Dabei wird für die Funkübertragung von Daten, etwa von Multimedia Messages MMs, das in der Abbildung von Fig. 1 dargestellte Kommunikationssystem 1 nach dem Wireless Session Protocol Schema WAP WSP angewendet. Dieses umfaßt eine Ebene 2 eines Datenversenders, auch als MMS User Agent A M-UA_A bezeichnet. Weiter ist eine Ebene 3 eines Providers vorgesehen, dessen Netzelement den Service ausführt und nachfolgend als MMS Relay M-SR bezeichnet wird. Schließlich ist eine Ebene 4 als die Ebene eines Empfängers vorgesehen, der auch als MMS User Agent B M-UA_B bezeichnet wird.

Selbstverständlich ist es möglich, daß in der Ebene 3 mehr als nur ein Provider beispielsweise auftritt. Das ist beispielsweise dadurch möglich, daß der Datenversender M-UA_A und der gewählte Empfänger M-UA_B bei unterschiedlichen Providern sind. Zudem können diese unterschiedlichen Provider noch durch dritte Provider als Netzbetreiber miteinander verbunden sein. Hier wird jedoch die vorliegende vereinfachte Darstellung gewählt, da die genaue Struktur in der Ebene 3 für den prinzipiellen Signalverlauf jedoch ohne Belang ist.

Die Abbildung von Figur 1 zeigt dementsprechend ein sogenanntes Transaction Flow Diagramm nach heutigem Stand der Technik gemäß [2], in dem der Austausch der WAP Messages zwischen nur drei beteiligten Instanzen, MMS User Agent A M-UA_A, MMS Relay M-SR und MMS User Agent B M-UA_B, bei Versand bzw. Empfang einer MM dargestellt ist. Unter MMS User Agent versteht man eine Applikation auf einem Teilnehmer-Endgerät, das die MMS-Funktionalität realisiert. Die Ebene 2 des Datenversenders umfaßt mindestens ein Teilnehmer-Endgerät oder Telekommunikationsgerät 5, ebenso umfaßt auch die Ebene 4 des Empfängers ein Teilnehmer-Endgerät oder Telekommunikationsgerät 6. Diese Telekommunikationsgeräte 5,6 können beispielsweise als übliche Handies oder als Geräte mit weiteren Eingabe- oder Anzeigefunktionen, wie etwa Laptops, ausgebildet sein.

Es wird nun die Abfolge einzelner Signale in dem vorstehend beschriebenen Kommunikationssystem 1 erläutert, die zum Versenden einer MMS von MMS User Agent A M-UA_A über das MMS Relay M-SR hin zum MMS User Agent B M-UA_B notwendig ist:

Eine im Telekommunikationsgerät 5 des Versenders M-UA_A verfaßte oder über dieses weiterzuleitende Multimedia message MM kann einen oder mehrere Elemente oder Datensätze enthalten, beispielsweise einzelne Bilder, Filmsequenzen, Texte oder ähnliches. Die MM wird zunächst als Anfrage-Sendung, die im WAP-Protokoll den Namen M-Send.req trägt, an den Provider M-SR in der Ebene 3 versandt. Von dort wird die eingegangene Sendung mit einer Rücksendung M-Sconf an den Versender M-UA-A der Ebene 2 quittiert. Nach dem WAP-Protokoll wird diese Rücksendung M-send.conf genannt.

Zeitlich darauffolgend wird vom Provider M-SR eine Information M-Nind an den Empfänger M-UA-B in Ebene 4 gesandt, mit der dieser darüber informiert wird, daß für ihn eine Nachricht beim Provider M-SR zum Herunterladen bereitliegt, nach dem WAP-Protokoll M-Notification.ind genannt.

Hierüber erhält der Provider M-SR beispielsweise automatisch eine quittierende Rückmeldung M-NRind oder M-NotifyResp.req gemäß WAP Standard von dem Telekommunikationsgerät 6 des Empfängers M-UA-B aus Ebene 4 hin zur Ebene 3 zurückgesendet. Erst auf Anforderung durch den Empfänger mit einer Sendung W-Greq oder entsprechend WSP GET.req wird von dem Provider M-SR die MM mit einer Sendung M-Rconf bzw. M-retrieve.com an den Empfänger M-UA-B weitergeleitet. Eine Nachricht M-Aind bzw. M-Acknowledge.ind quittiert den Empfang der MM in der Ebene 4. Eine abschließende Nachricht M-Dind bzw. M-Delivery.ind gibt eine Empfangsbestätigung von der Ebene 3 an den Versender M-UA-A in Ebene 2 zurück.

Zur Verwaltung der vorstehend genannten Sendungen dienen sog. Header-Felder, also der eigentlichen MM und/oder einzelnen Elementen vorangestellte Felder, in denen Informationen über die Herkunft, Sendezeit, Dateigröße und weitere Details enthalten sein können. Erfindungsgemäß ist die Anzahl der Header-fields erhöht oder deren Einträge verändert, und zwar zur Angabe eines Feldantrags und/oder einer Kennzeichnung einer Startanzeige, mit der die MM noch Vorgabe durch den Sender M-UA-A unmittelbar und automatisch als Startpunkt angezeigt oder abgespielt werden soll.

Vorstehend wurden hierzu drei prinzipielle Möglichkeiten vorgeschlagen. In Fall 1 und Fall 2 wurde ein Header der gesamten MM durch einen oder mehrere Feldeinträge modifiziert. In Fall 3 wird im Datenteil der MM in einem bestimmten Element oder Datensatz eine Markierung in den Header-Feldern zugefügt.

Von den genannten drei Möglichkeiten besitzen die ersten beiden den Vorteil, daß eine zusätzliche Information in einem Header der MM enthalten ist. Dadurch ist diese Information nicht nur in der Nachricht M-Sreq zum Versenden der MM und der Nachricht M-Rconf zum Zustellen der MM, sondern auch in der Nachricht M-Nind zur Benachrichtigung des Empfängers über eine zur Zustellung bereitliegende MM enthalten.

Die zuletzt genannte Nachricht M-Nind umfaßt dabei den Datenteil der MM nicht. In dem dritten Fall ist diese neue Information über das markierte Element der MM daher in der Benachrichtigung auch nicht enthalten. Dafür zeichnet sich ein Datensatz gemäß des dritten Fall gegenüber den beiden vorangehenden Ausführungsformen durch einen geringeren Datenumfang aus.

Sind den Elementen der MM im Datenteil eindeutige Bezeichner, z.B. Content-Ids, zugeordnet, kann wahlweise eine der ersten beiden Möglichkeiten umgesetzt werden. Im Fall 1 wird ein zusätzliches Header-Feld im Header der MM eingefügt, das die Content-ID des zu markierenden Elements der MM enthält. Dazu wird das hiermit vorgeschlagene neue Header-Feld X-Mms-Initial-Presentation-Content-ID verwendet, siehe Fig. 6.

Im Fall 2 wird im Header der MM eine Beschreibung des Elements eingefügt, die mit demselben Bezeichner Content-ID beginnt, der dem Element der MM im Datenteil der MM zugeordnet ist. In dieser Beschreibung wird das zu markierende Element der MM durch Einfügen des hiermit vorgeschlagenen neuen Parameters Initial-Presentation-Flag markiert.

Im Fall 3 wird das MM-Element direkt im Datenteil durch das Header-Feld X-Mms-Initial-Presentation-Flag gekennzeichnet, siehe Fig. 3, um dem empfangenden User Agent mitzuteilen, daß das Element beim Öffnen der MM unmittelbar ausgegeben bzw. angezeigt werden soll. Diese Information erhält der Empfänger jedoch frühestens beim Herunterladen der gesamten Nachricht mit der Message M-Rconf.

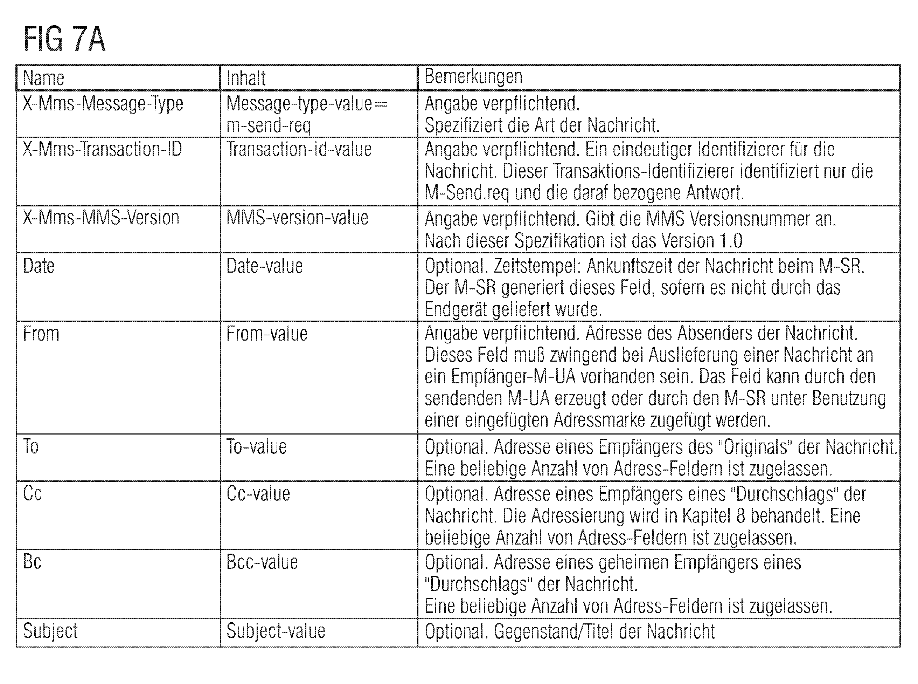

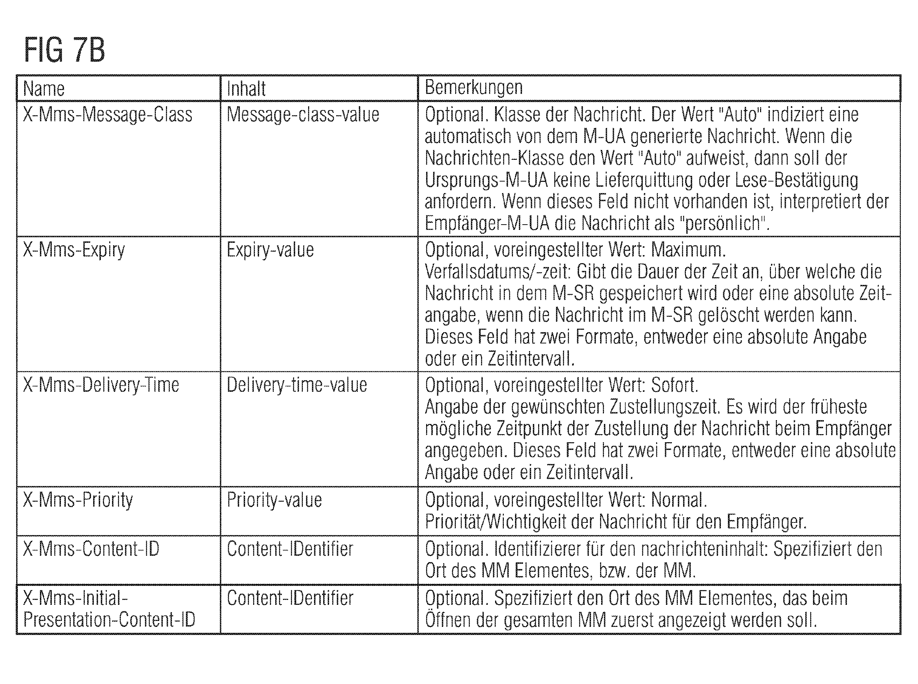

Die binären Codes für beide neuen Header Felder X-Mms-Initial-Presentation-Content-ID und X-Mms-Initial-Presentation-Flag sind in Fig. 4 dargestellt, wobei auch nur die Realisierung einer der Varianten möglich ist. Die Integration des Header-Feldes X-Mms-Initial-Presentation-Flag in die WAP-Definitionen der Nachrichten *M-Sreq, M-Nind* und *M-Rconf* ist in den Tabellen der Figuren 7 bis 9 dargestellt. In Kombination mit dem gemäß der Patentanmeldung [11] neuen Header-Feld X-Mms-Content-ID ist die als Fall 2 angegebene Variante für die angestrebte Funktionalität besonders geeignet und sollte von den hier beschriebenen Varianten bevorzugt anhand eines detailliert beschriebenen Ausführungsbeispiels dargestellt werden.

In dem Ausführungsbeispiel, das auf den durch das WAP-Forum definierten binären Codierungen der im MMS ausgetauschten Messages basiert, wird die Möglichkeit einer Kennzeichnung mit dem Initial-Presentation-Flag im MM-Header gemäß Variante 2 demonstriert. Erfindungsgemäße Änderungen werden durch Umrahmungen verdeutlicht dargestellt. Entsprechende Bezeichnungen nach dem WAP-Standard werden an geeigneten Stellen dazu genannt.

### Dabei wird folgendes Szenario angenommen:

MMS User Agent A verschickt eine MM bestehend aus einem Text, einem MP3-Audio, einem JPEG-Bild, einem MPEG-4-Video und einer SMIL-Präsentationsbeschreibung an einen Empfänger User Agent B. Die einzelnen Elemente sind im Header gemäß der Patentanmeldung [11] detailliert beschrieben. Zusätzlich ist das Text-Element durch das Initial-Presentation-Flag im entsprechenden Header-Feld X-Mms-Content-ID der MM gekennzeichnet. Das Flag wird in den Nachrichten M-Sreq, M-Nind und M-Rconf an die Empfänger übertragen. Die folgenden Messages werden zwischen den Einheiten übertragen.

### MM wird an den Adressaten verschickt:

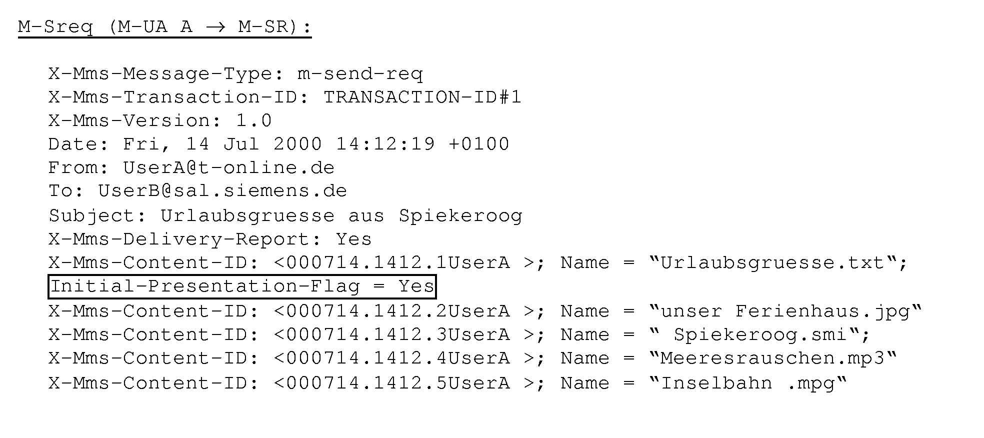

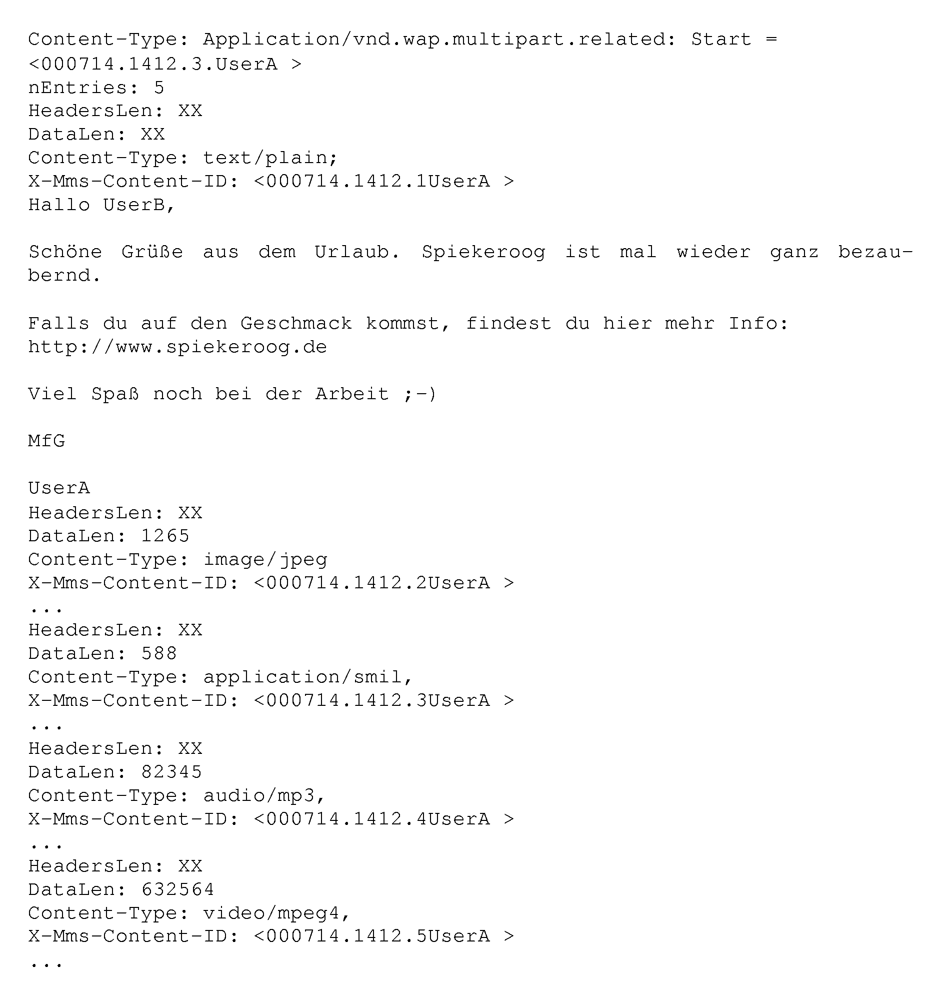

In der Message sind im Header Header-Felder zur Beschreibung der MM-Elemente codiert (X-Mms-Content-ID). Das Feld zur Beschreibung des Text-Elements enthält das neue Initial-Presentation-Flag.

Nach dem Stand der Technik wird die Sendeanfrage (WAP: M-Send.req) des MMS User Agent A mit einer Nachricht M-Sconf (in WAP: M-Send.conf) vom M-SR quittiert. Im Rahmen dieser Erfindung wird diese Nachricht nicht modifiziert und daher hier nicht aufgeführt.

Im MMS [1, 2] ist vorgesehen, einen MMS Teilnehmer über neue Nachrichten, die für ihn vorliegen und zum Herunterladen bereit sind, zu informieren. Diesen Zweck erfüllt die Empfängerbenachrichtigung M-Nind (in WAP: M-Notification.ind). In diesem Beispiel wird eine Benachrichtigung an den Empfänger User B versendet.

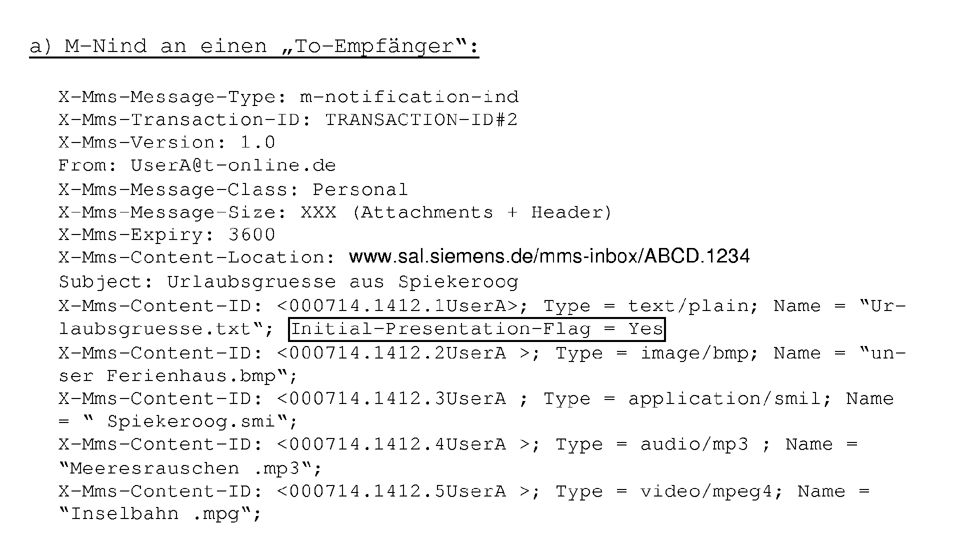

Neben den üblichen Feldern der Nachricht kann nun das Initial-Presentation-Flag der Nachricht M-Sreq in die Nachricht M-Nind übernommen werden. Zusätzlich werden durch das M-SR noch die Information Type aus den Informationen des Body der Nachricht M-Sreq generiert bzw. wird das enthaltene Bild vom Typ image/jpeg in den Typ image/bmp konvertiert, da das Endgerät in diesem Beispiel JPEG-Bilder nicht anzeigen kann.

In der Beschreibung des Textelements ist das Initial-Presentation-Flag enthalten. Die weiteren Elemente sind entsprechend [2] bzw. der Patentanmeldungen [10,11] entsprechend codiert. Nach Stand der Technik wird der Download der MM durch den Befehl W-Greq veranlaßt. Die MM wird darauf vom M-SR in der Nachricht M-Rconf zum MM-UA A gesendet. Im Folgenden wird die Nachricht von dem Empfänger User B komplett auf sein Endgerät heruntergeladen. Die Nachricht M-Rconf wird wie folgt codiert:

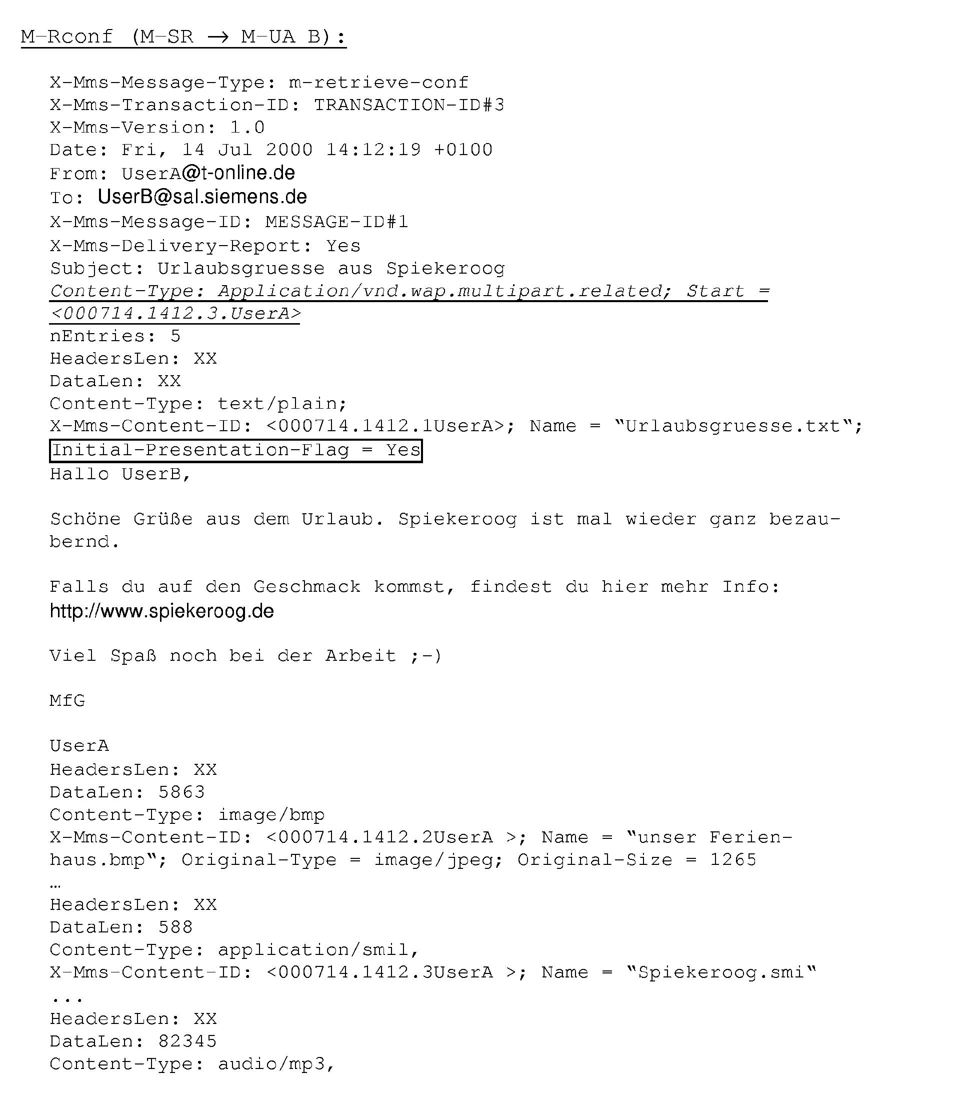

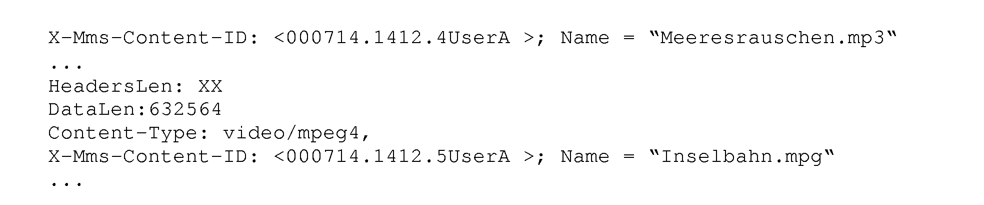

Der Empfänger M-UA_B quittiert den erfolgreichen Empfang der MM anschließend gemäß Stand der Technik mit der Nachricht M-Aind.

In der Nachricht M-Rconf ist das Initial-Presentation-Flag im Feld X-Mms-Content-ID integriert und im Datenteil direkt dem Element der MM zugeordnet, das unmittelbar beim Öffnen der MM ausgegeben werden soll. Dadurch ist eine Speicherung der Informationen aus der Empfängerbenachrichtigung M-Nind durch den empfangenden M-UA nicht erforderlich. Die Information, welches Element der MM beim Öffnen der MM unmittelbar ausgegeben werden soll, ist direkt mit dem Element der MM verbunden.

Die weiteren Messages einer MMS-Implementierung bleiben von dieser Erfindung unberührt und werden hier nicht dargestellt.

Zusammenfassend sind vorstehend verschiedene Möglichkeiten zur Veranlassung einer unmittelbaren und automatischen Darstellung eines Elements beim Öffnen einer MM durch einen Empfänger durch Kennzeichnung des betreffenden Elements zusammen mit einigen der jeweiligen Vorteile vorgestellt worden.

Hintergrundangaben zu WAP, MMS und vorgehenden Anmeldungen finden sich neben den vorstehend gegebenen Zitatstellen zusammengefaßt insbesondere an folgenden Stellen:
[1] 3G TS 23.140 version 4.1.0, Release 4; Third Generation Partnership Project; Technical Specification Group Terminals; Multimedia Messaging Service (MMS); Functional Description; Stage 2
[2] WAP-209-MMS Encapsulation, Release 2000; Wireless Application Protocol; WAP Multimedia Messaging Service; Message Encapsulation; MMS Proposed SCD 1.0
[3] WAP-203-WSP, Version 4-May-2000; Wireless Application Protocol, Wireless Session Protocol Specification; Chapter 8.4: "Header Encoding".
[5] 3G TS 22.140 v.4.0.1 (Juli 2000) : 3rd Generation Partnership Project; Technical Specification Group Services and System Aspects; Service Aspects; Stage 1 Multimedia Messaging Service.
[6] RFC822: "Standard for the Format of ARPA Internet Text Messages", Crocker D., August 1982. URL: ftp://ftp.isi.edu/in-notes/rfc822.txt.
[7] RFC2045: "Multipurpose Internet Mail Extensions (MIME) Part One: Format of Internet Message Bodies", Freed N., November 1996.
   URL: ftp://ftp.isi.edu/in-notes/rfc2045.txt.
[8] RFC2046: "Multipurpose Internet Mail Extensions (MIME) Part Two: Media Types", Freed N., November 1996. URL: ftp://ftp.isi.edu/in-notes/rfc2046.txt.
[9] RFC2047: "MIME (Multipurpose Internet Mail Extensions) Part Three: Message Header Extensions for Non-ASCII Text", Moore K., November 1996. URL:
   ftp://ftp.isi.edu/in-notes/rfc2047.txt.
[10] Trauberg, M. et al.: Verfahren zur detailierten Benachrichtigung eines Empfängers einer Multimedia Message mit Informationen über die einzelnen Bestandteile der Message im Multimedia Messaging Service (MMS) der dritten Mobilfunkgeneration und zum gezielten Herunterladen einzelner Bestandteile einer Message.", Patentanmeldung mit der Anmeldenummer EP 01 101 057.6.
[11] Trauberg, M. et al.: "Verfahren zur detaillierten Benachrichtigung eines Empfängers einer Multimedia Message im Multimedia Messaging Service (MMS)", Patentanmeldung mit der Anmeldenummer EP 01 107 278.2
[12] Synchronized Multimedia Integration Language (SMIL 2.0) Specification; W3C Working Draft 01 March 2001;
   http://www.w3.org/TR/smil20/

## Patentansprüche

1. Verfahren zur Übertragung von Daten in einem Kommunikationssystem, insbesondere zur Übertragung von Text- und/oder Bilddaten mit oder ohne Ton,
wobei eine zu übermittelnden Datenmenge aus einzelnen Elementen zusammengesetzt wird, die jeweils nach gleichen oder unterschiedlichen Standards codiert werden,
**dadurch gekennzeichnet,**
**daß** eine Kennzeichnung eines Elementes zur Veranlassung einer unmittelbaren Darstellung dieses Elementes beim Öffnen der Daten vorgenommen wird.

2. Verfahren nach Anspruch 1,
**dadurch gekennzeichnet,**
**daß** die Daten zum Versand derart aufbereitet werden, daß sie einen Header zum Transport von Organisationsinformationen und einen Body zum Transport einer jeweiligen Nutzinformation als Elemente vorzugsweise in Form mehrerer Datenpakete umfassen.

3. Verfahren nach einem der beiden vorhergehenden Ansprüche,
**dadurch gekennzeichnet,**
**daß** die Daten als Multimedia Message (MM) in einem Multimedia Message Service (MMS) übertragen werden.

4. Verfahren nach dem vorhergehenden Anspruch,
**dadurch gekennzeichnet,**
**daß** die Daten auf ein mobiles Teilnehmer-Endgerät übertragen werden, insbesondere ein WAP-fähiges Mobiltelefon.

5. Verfahren nach einem der vorhergehenden Ansprüche,
**dadurch gekennzeichnet,**
**daß** zur Kennzeichnung ein zusätzliches Header-Feld geschaffen wird.

6. Verfahren nach dem vorhergehenden Anspruch,
**dadurch gekennzeichnet,**
**daß** eine Codierung des Feld-Namens und/oder eine Codierung des Feld-Wertes durchgeführt wird.

7. Verfahren nach einem der beiden vorhergehenden Ansprüche,
**dadurch gekennzeichnet,**
**daß** das Header-Feld in WAP wie folgt codiert:
Codierung des Feld-Namens X-Mms-Initial-Presentation-Content-ID als 0x1F und/oder
Codierung des Feld-Wertes von X-Mms-Initial-Presentation-Content-ID als Text-string.

8. Verfahren nach dem vorhergehenden Anspruch,
**dadurch gekennzeichnet,**
**daß** die Information im Header der MM mit dem Header-Feld X-Mms-Initial-Presentation-Content-ID codiert wird und dem zu bezeichnenden Element eine Content-ID in einem Datenteil der zu übersendenden Daten (MM) zugewiesen wird.

9. Verfahren nach einem der vorhergehenden Ansprüche,
**dadurch gekennzeichnet,**
**daß** ein zusätzliches Header-Feld in WAP wie folgt codiert wird:
Codierung des Feld-Namens X-Mms-Initial-Presentation-Flag als 0x20 und/oder
Codierung des Feld-Wertes von X-Mms-Initial-Presentation-Flag.

10. Verfahren nach dem vorhergehenden Anspruch,
**dadurch gekennzeichnet,**
**daß** einem zu bezeichnenden Element in einem Datenteil der MM ein Header-Feld X-Mms-Initial-Presentation-Flag zugefügt wird.

11. Verfahren nach dem vorhergehenden Anspruch,
**dadurch gekennzeichnet,**
**daß** das Element in einem Datenteil der zu übersendenden Daten (MM) markiert wird.

12. Verfahren nach einem der vorhergehenden Ansprüche,
**dadurch gekennzeichnet,**
**daß** einem zu bezeichnenden Element eine Content-ID in einem Datenteil der MM zugewiesen wird, im Header der MM ein Verweis auf die Content-ID eingefügt wird, womit eine Beschreibung des Elementes der MM eingefügt und innerhalb dieser Beschreibung das Element der MM mit einem Parameter Initial-Presentation-Flag markiert wird.

13. Verfahren nach einem der vorhergehenden Ansprüche,
**dadurch gekennzeichnet,**
**daß** die Kennzeichnung in den Daten codiert wird, die von einem sendenden MMS User Agent zu einem MMS Relay zum Verschicken der MM gesendet wird.

14. Verfahren nach einem der vorhergehenden Ansprüche,
**dadurch gekennzeichnet,**
**daß** die Kennzeichnung in den Daten codiert wird, von einem MMS Relay zu einem empfangenden MMS User Agent zur Benachrichtigung des empfangenden User Agent über das Vorliegen neuen Daten (MM) gesendet wird.

15. Verfahren nach einem der vorhergehenden Ansprüche,
**dadurch gekennzeichnet,**
**daß** die Kennzeichnung in den Daten codiert wird, die von einem MMS Relay zu einem empfangenden MMS User Agent zur Zustellung der MM gesendet wird.

16. Verfahren nach einem der vorhergehenden Ansprüche,
**dadurch gekennzeichnet,**
**daß** ein **gekennzeichnetes** Element an den empfangenden User Agent bevorzugt übertragen wird.

17. Verfahren nach einem der vorhergehenden Ansprüche,
**dadurch gekennzeichnet,**
**daß** eine vorgegebene Information des initial zu öffnenden Datenelements als Entscheidungshilfe dafür verwendet wird, ob das **gekennzeichnete** Element bevorzugt bzw. alleine zum User Agent übertragen werden soll.

18. Teilnehmer-Endgerät zur Übertragung und/oder Darstellung von Daten in Form von Text- und/oder Bilddaten mit oder ohne Ton, die als Elemente einer zu übermittelnden Datenmenge nach gleichen oder unterschiedlichen Standards codiert sind,
**dadurch gekennzeichnet,**
**daß** das Teilnehmer-Endgerät zur Umsetzung eines Verfahrens nach einem der vorstehenden Ansprüchen ausgebildet ist.

19. Teilnehmer-Endgerät nach dem vorhergehenden Anspruch,
**dadurch gekennzeichnet,**
**daß** es als Mobiltelefon ausgebildet ist, insbesondere nach dem UMTS-Standard.

20. Computerprogrammerzeugnis, das ein computerlesbares Speichermedium umfaßt, auf dem ein Programm gespeichert ist, das es einer Datenverarbeitungsanlage oder einem Computer ermöglicht, nachdem es in den Speicher des Computers geladen worden ist, innerhalb von Datenübertragung in einem Kommunikationssystem und insbesondere einem Mobilfunknetz den zu übertragenden Daten nach Vorgabe durch einen Absender eine Kennzeichnung eines Elementes vorgenommen wird, um eine unmittelbare Darstellung dieses Elementes beim Öffnen der Daten beim Empfänger zu veranlassen.

21. Computerprogrammerzeugnis nach dem vorhergehenden Anspruch,
**dadurch gekennzeichnet,**
**daß** dieses ein Verfahren nach einem der Ansprüche 1 bis 17 bei Datenversand in einem Mobilfunknetz durchführt.

22. Kommunikationssystem
**dadurch gekennzeichnet,**
**daß** mindestens eine Komponente des Kommunikationssystems nach einem Verfahren der Ansprüche 1 bis 17 arbeitet und/oder ein Teilnehmer-Endgerät nach einem der Ansprüche 18 bis 19 umfaßt und/oder ein Computerprogrammerzeugnis nach einem der Ansprüche 20 bis 21 beinhaltet ist.
